# FASCICULE DE BREVET EUROPEEN

(11) **EP 0 896 727 B1**
(45) Date de publication et mention de la délivrance du brevet: **29.12.1999**
(21) Numéro de dépôt: 97921905.2
(22) Date de dépôt: 30.04.1997
(51) Int. Cl.: H01H 1/40, H04M 1/274

(54) **CARTE A CIRCUIT INTEGRE DE FAIBLE EPAISSEUR COMPORTANT UN COMMUTATEUR PERFECTIONNE A ACTIONNEMENT MANUEL**
DÜNNE IC-KARTE MIT HANDBETÄTIGTER SCHALTER
THIN INTEGRATED CIRCUIT CARD COMPRISING AN IMPROVED MANUALLY ACTUATED SWITCH

(30) Priorité: 30.04.1996 FR 9605654
(43) Date de publication de la demande: 17.02.1999
(73) Titulaire: GEMPLUS S.C.A., 13881 Gémenos Cédex (FR)
(72) Inventeur: MARTIN, Philippe, F-21200 Beaune (FR)
(86) Numéro de dépôt international: FR9700763
(87) Numéro de publication internationale: WO9741578

(56) Documents cités:
- EP-A- 0 664 633
- FR-A- 2 436 486
- US-A- 4 882 750
- US-A- 5 455 857

## Description

L'invention concerne une carte à circuit intégré, du type comportant deux plaques extérieures, inférieure et supérieure, séparées par au moins une plaque intercalaire, du type dans lequel les plaques portent des composants électroniques reliés entre eux par des pistes conductrices, et du type dans lequel il existe au moins un commutateur susceptible d'autoriser ou d'interdire le passage d'un courant électrique entre deux de ses bornes qui sont reliées à au moins une des pistes.

Grâce à la mise au point de nouvelles techniques de fabrication, il est maintenant possible d'obtenir des composants électroniques de très faibles dimensions qui permettent leur intégration dans des cartes dont l'épaisseur totale peut être très faible.

Il a notamment été proposé dans la demande internationale WO-A1-97/15899 (l'état de la technique selon l'article 54(3) (BE) une carte à circuit intégré comportant à la fois une puce à contacts affleurants et un circuit de production de signaux acoustiques relié à un transducteur sonore, le tout étant contenu dans l'épaisseur totale de la carte qui n'excède pas 0,8 mm, ce qui est compatible avec le format normalisé le plus répandu pour les cartes à circuit intégré.

De telles cartes, munies d'un circuit de production de signaux acoustiques, permettent de transmettre, par l'intermédiaire d'une ligne téléphonique classique, des informations codées qui peuvent par exemple servir à la commande à distance de divers appareillages.

Ces informations sont généralement codées selon un principe connu sous l'appellation anglo-saxonne de "DUAL TONE MODULATION FREQUENCY (DTMF)".

Toutefois, la présence d'un tel circuit nécessite de prévoir un commutateur de déclenchement destiné à être commandé par l'utilisateur de la carte pour provoquer l'envoi des signaux codés.

Selon l'état de la technique, de tels commutateurs sont réalisés sous la forme d'un dôme déformable agencé sur une des faces externes de la carte et que l'utilisateur doit presser, dans le sens de l'épaisseur de la carte, pour établir un contact électrique entre le dôme déformé et une zone conductrice agencée, en regard du dôme, sur l'une des plaques de la carte.

Pour déclencher un tel commutateur, l'utilisateur doit serrer la carte dans le sens de son épaisseur, par exemple entre le pouce et l'index, et il exerce généralement sur la carte des efforts importants qui provoquent nécessairement une flexion de celle-ci, notamment dans le cas des cartes de très faible épaisseur.

De telles flexions, répétées régulièrement, peuvent conduire à l'endommagement de certains des composants contenus dans la carte qui devient alors inutilisable.

L'invention a donc pour but de proposer un commutateur pour une carte à circuit intégré de très faible épaisseur, dont la conception permet une manipulation aisée par l'utilisateur sans soumettre la carte à des efforts trop importants.

Dans ce but, l'invention propose une carte à circuit intégré du type vu précédemment, dans laquelle le commutateur comporte un poussoir qui est agencé au niveau d'un bord périphérique de la carte, qui coulisse selon une direction longitudinale dans le plan de la carte entre deux positions active et de repos, et qui commande une touche de contact destinée à relier électriquement les bornes du commutateur.

Selon des caractéristiques préférées de l'invention :
- le poussoir du commutateur est guidé selon une direction verticale perpendiculaire au plan général de la carte par deux faces en vis-à-vis, supérieure et inférieure, de deux plaques de la carte ;
- le poussoir du commutateur est reçu au moins partiellement dans une fente qui est formée dans l'une au moins des plaques intercalaires, qui débouche dans un bord périphérique de la carte, et dont deux bords longitudinaux en vis-à-vis assurent le guidage du poussoir ;
- le poussoir du commutateur comporte au moins un ergot qui s'étend selon une direction transversale dans le plan général de la carte, l'ergot est reçu dans une lumière agencée dans un des bords longitudinaux de la fente de la plaque intercalaire, et en ce que la course du poussoir selon la direction longitudinale est déterminée, selon au moins un sens, par la coopération de l'ergot avec un bord transversal d'extrémité longitudinale de la lumière ;
- le poussoir est en forme de plaque, il comporte un bord arrière de commande, il comporte deux bords latéraux longitudinaux qui assurent son guidage dans la fente, le poussoir comporte deux ergots transversaux qui s'étendent transversalement vers l'extérieur depuis chacun de ses bords latéraux et qui sont reçus dans deux lumières formées dans les bords longitudinaux de la fente, et en ce qu'il comporte une découpe en T dont une portion longitudinale débouche, à l'arrière dans une portion transversale de la découpe, et, à l'avant, dans un bord avant du poussoir ;
- le poussoir est ramené élastiquement vers sa position de repos par un ressort de rappel ;
- le ressort de rappel est agencé entre le bord avant du poussoir et un bord transversal de fond de la fente ;
- le ressort de rappel est réalisé sous la forme d'une lame élastique déformable dont une portion centrale est en appui contre le bord de fond de la fente et dont les deux extrémités sont recourbées pour être au contact du bord avant du poussoir, de part et d'autre de l'extrémité avant débouchante de la portion longitudinale de la découpe ;
- le bord arrière de commande du poussoir affleure au niveau du bord de la carte lorsque le poussoir est en position de repos, et les plaques extérieures de la carte comportent, en regard de la fente, des entailles formées dans leur bord pour permettre à l'utilisateur de solliciter le poussoir longitudinalement vers sa position active, en direction de l'intérieur de la carte, notamment en agissant sur le poussoir par l'un de ses doigts ;
- la touche de contact est parallélépipédique, elle est reçue dans la portion transversale de la découpe du poussoir, et en ce qu'une face avant de la touche de contact est destinée à coopérer avec un composant fixe du commutateur qui, lorsque le poussoir est en position active, est reçu à l'intérieur de la portion longitudinale de la découpe du poussoir ;
- le composant fixe comporte deux extrémités qui sont raccordées aux bornes du commutateur et qui sont destinées à être reliées électriquement par la touche de contact lorsque le poussoir est en position active ;
- le composant fixe est un isolant dont les deux extrémités sont métallisées et qui est destiné à être court-circuité par la touche de contact ;
- le composant fixe est un condensateur, et la touche de contact est destinée à provoquer la décharge du condensateur ;
- la touche de contact du commutateur est une pastille conductrice en matériau polymère chargé en particules conductrices ;
- le commutateur commande le déclenchement d'un composant actif de la carte ;
- le commutateur commande un circuit de production de signaux acoustiques ;et
- l'épaisseur de la carte est de l'ordre de 0.8 mm.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective éclatée d'une carte à circuit intégré munie d'un commutateur conforme aux enseignements de l'invention ;
- les figures 2 et 3 sont des vues partielles en plan dans lesquelles on a illustré le commutateur selon l'invention, respectivement en position de repos et en position active.

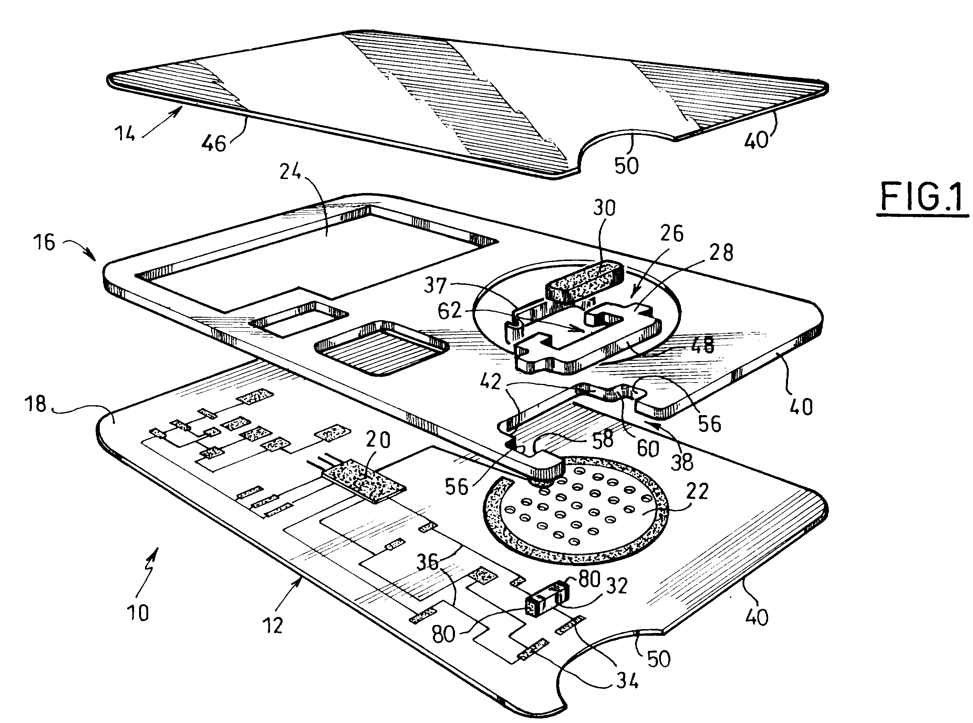

On a représenté sur la figure 1 une carte à circuit intégré 10 dont la structure est essentiellement composée de deux plaques externes, inférieure 12 et supérieure 14, séparées par une plaque intercalaire 16.

Comme on peut le voir sur la figure 1, la face supérieure 18 de la plaque inférieure 12 porte des composants électroniques qui sont reliés entre eux par des pistes conductrices pour former, entre autres, un circuit de commande d'un générateur de signaux acoustiques destinés à alimenter un transducteur sonore 22.

La carte 10 peut également comporter d'autres types de composants et de circuits (non représentés) tels qu'un module à mémoire à contact affleurants permettant d'échanger des données avec un appareil muni d'un lecteur adapté.

La plaque intercalaire 16 participe essentiellement à la rigidité de la carte et comporte des évidements 24, ou fenêtres, destinés à former des logements pour les composants électroniques lorsque la carte 10 est assemblée.

L'épaisseur de la plaque inférieure 12 est par exemple de l'ordre de 0,2 mm tandis que celle de la plaque intercalaire 16 peut être comprise entre 0,4 et 0,5 mm, la plaque supérieure 14 étant très mince.

Dans certains cas, la plaque supérieure 14 peut elle aussi porter des composants électroniques.

Éventuellement, il est possible de prévoir plusieurs plaques intercalaires empilées et munies de différents évidements.

La carte intercalaire 16 peut également comporter des zones métallisées (non représentées) destinées à relier entre eux certains des circuits contenus dans la carte.

Conformément aux enseignements de l'invention, la carte 10 comporte un commutateur 26 qui est destiné à permettre le déclenchement du circuit de production de signaux sonores auquel est relié le transducteur sonore 22.

Selon un premier aspect de l'invention, le commutateur 26 est destiné à être monté coulissant entre les deux plaques inférieure 12 et supérieure 14, selon une direction longitudinale dans le plan général de la carte 10.

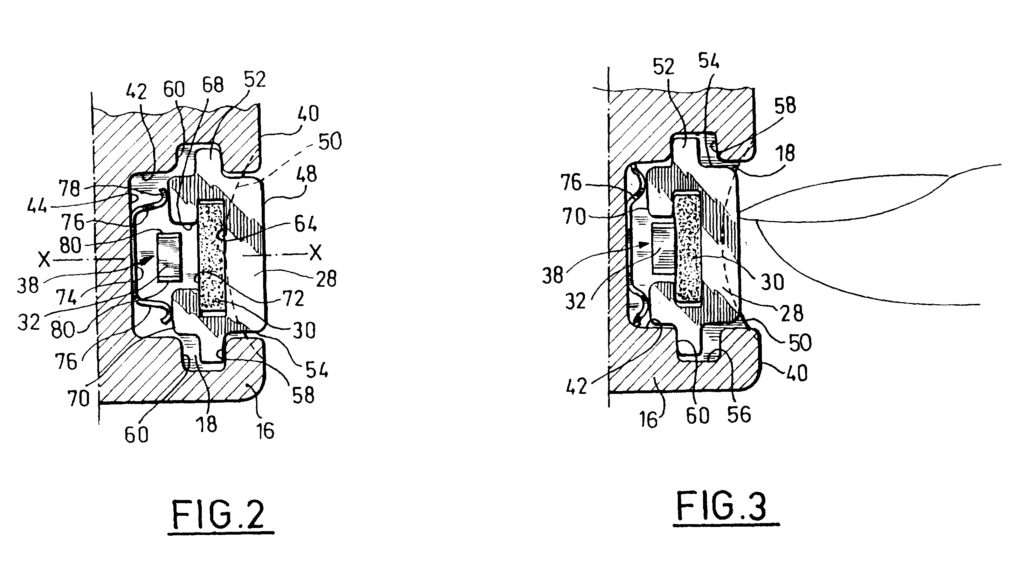

Le commutateur 26 comporte un poussoir d'actionnement 28 muni d'une touche de contact 30 qui constitue l'organe de déclenchement du commutateur 26 et qui est destinée à venir au contact, lorsque le poussoir 28 est sollicité depuis une position de repos représentée sur la figure 2 vers une position active représentée sur la figure 3, d'un composant fixe 32 du commutateur 26 qui est relié électriquement à deux bornes 34 du commutateur 26 raccordées par des pistes conductrices 36 au circuit de commande du transducteur 22.

Un ressort de rappel 37 est également prévu pour solliciter en permanence le poussoir 28 vers sa position de repos.

Le poussoir 28 est un élément lui aussi en forme de plaque, de même épaisseur que la plaque intercalaire 16, et il est guidé longitudinalement dans une fente 38 agencée dans un bord arrière 40 de la plaque intermédiaire 16.

La fente 38 comporte deux bords longitudinaux parallèles en vis-à-vis 42 qui assurent le guidage du poussoir 28 qui est symétrique par rapport à l'axe longitudinal médian X-X de symétrie de la fente 38.

La fente 38 débouche, à l'arrière, dans le bord arrière 40 de la plaque intercalaire 16 et elle est délimitée longitudinalement à l'avant par un bord transversal avant 44.

La fente 38 peut être avantageusement réalisée de manière simple et précise par découpe au jet d'eau à haute pression ou par découpe laser.

Lorsque la carte 10 est assemblée, le poussoir 26 est donc susceptible de coulisser longitudinalement dans la fente 38 et il est guidé, selon une direction perpendiculaire au plan général de la carte 10, par les faces internes en vis-à-vis 18, 46 des plaques inférieure 12 et supérieure 14 qui délimitent ainsi dans la carte 10, avec la fente 38, un logement ouvert longitudinalement vers l'arrière dans le bord 40 de la carte 10, et qui obturent la fente 38 vers le bas et vers le haut.

Dans le cas où il existe plusieurs plaques intercalaires 16, on peut prévoir que l'épaisseur du poussoir 28 ne dépasse pas l'épaisseur de l'une de ces plaques intercalaires, et le poussoir 28 est alors guidé entre l'une des plaques extérieures 12, 14 et une plaque intercalaire dépourvue de fente de guidage.

Le poussoir 28 en forme de plaque comporte un bord arrière de commande 48 qui affleure dans le bord arrière 40 de la plaque intermédiaire 16 lorsque le poussoir 28 est dans sa position de repos représentée à la figure 2. Par ailleurs, les plaques externes 12, 14 sont munies chacune d'une entaille 50, en regard de l'extrémité arrière débouchante de la fente 38, de sorte que l'utilisateur puisse agir sur le bord arrière 48 du poussoir pour solliciter celui-ci longitudinalement en direction de l'intérieur de la carte, vers le fond de la fente 38, jusqu'à sa position active représentée sur la figure 3.

En évitant que le poussoir 28 ne dépasse en dehors des bords latéraux de la carte, on évite ainsi qu'il soit sollicité vers sa position active de manière involontaire.

La course longitudinale du poussoir 28 dans la fente 38 est déterminée par deux ergots 52 qui s'étendent transversalement dans le plan général de la carte 10 depuis deux bords latéraux longitudinaux 54 du poussoir 28 qui coopèrent avec les bords longitudinaux 42 de la fente 38 pour le guidage du poussoir 28.

Les ergots 52 sont reçus dans des lumières 56 taillées transversalement dans les bords longitudinaux 42 de la fente 38.

Les lumières 56 sont délimitées longitudinalement par des bords transversaux arrière 58 et avant 60 avec lesquels les ergots 52 coopèrent pour déterminer respectivement la position de repos et la position active du poussoir 28.

La course du curseur 28 peut par exemple être de l'ordre de 0,5 mm.

Le poussoir 28 est muni d'une découpe 62 en forme de T comportant essentiellement une partie transversale 64 agencée sensiblement au centre du poussoir 28 et une partie longitudinale 68 qui s'étend selon l'axe de symétrie X-X du commutateur 26, et qui débouche, à l'arrière, dans la portion transversale 64, et, à l'avant, dans un bord transversal avant 70 du poussoir 28.

La touche de contact 30, de forme parallélépipédique, est destinée à être insérée verticalement dans la portion transversale 64 de la découpe 62 de manière à comporter une portion de face avant 72 qui forme un fond transversal arrière pour la portion longitudinale 68 de la découpe 62.

La touche 30 est sensiblement de même épaisseur que le poussoir 28 et que la plaque intercalaire 16 de sorte qu'elle est également maintenue selon la direction perpendiculaire au plan général de la carte 10 par les plaques externes 12, 14 sans qu'il y ait besoin de recourir à des moyens de fixation complémentaires.

Le ressort 37 de rappel du poussoir 28 vers sa position de repos est constitué d'une lame déformable qui possède une portion centrale 74 en appui contre le bord transversal arrière 44 de la fente 38. La portion centrale 74 est prolongée de chaque côté par des bras 76 qui sont repliés longitudinalement vers l'arrière dans le plan de la carte 10 et dont les extrémités libres 78, recourbées transversalement vers l'extérieur par rapport à l'axe de symétrie X-X, sont en appui contre le bord transversal avant 70 du poussoir 28, de part et d'autre de l'extrémité longitudinale avant de la portion longitudinale 68 de la découpe 62.

Ainsi, lorsque le poussoir 28 est sollicité longitudinalement vers sa position active, les bras 76 du poussoir 28 sont fléchis transversalement vers l'extérieur de manière élastique, et lorsque l'utilisateur relâche sa pression sur son bord arrière 48, le poussoir 28 est ramené vers sa position de repos.

Il existe diverses possibilités pour le choix du composant fixe 32 du commutateur 26.

Le composant fixe 32 peut par exemple être constitué d'une pastille en céramique isolante, sensiblement parallélépipédique, dont deux tronçons d'extrémité transversale 80 sont métallisés et sont raccordés électriquement aux bornes 34 du commutateur 26.

Le composant fixe 32 est alors fixé sur la face supérieure 18 de la plaque inférieure 12 de telle sorte que, lorsque le poussoir 28 est en position active, le composant fixe 32 est reçu dans la portion longitudinale 68 de la découpe 62 du poussoir 28, et la face avant 72 de la touche de contact 30 relie électriquement les deux extrémités 80 du composant fixe 32, ce qui a pour résultat de fermer un circuit électrique et ce qui permet au circuit de commande 20 de déclencher la production de signaux acoustiques.

Le commutateur 26, ici du type normalement ouvert, peut aussi être du type normalement fermé.

On peut également prévoir de réaliser le composant fixe 32 sous la forme d'un condensateur de structure similaire. Les techniques actuelles permettent de fabriquer des condensateurs de 0,35 mm d'épaisseur de manière peu coûteuse et fiable.

Lorsque la touche 30 arrive au contact du composant fixe 32, elle provoque la décharge du condensateur préalablement chargé électriquement, ce qui fait chuter brutalement la différence de tension présente aux bornes 34 du commutateur 26, signal qui est susceptible d'être détecté par le circuit de commande 20.

Dans les deux cas, il est intéressant d'utiliser une touche de contact 30 réalisée sous la forme d'un matériau polymère chargé en particules conductrices.

En effet, on peut prévoir alors un jeu "négatif" entre la face avant 72 de la touche de contact 30 et le composant fixe 32 lorsque le curseur 28 est en position active, c'est-à-dire que sa face avant 72 est légèrement en avant d'une face arrière du composant 32.

La face avant 72 est alors susceptible de se déformer pour, d'une part, être parfaitement au contact du composant fixe 32 afin d'assurer de manière certaine la liaison électrique entre les deux extrémités métallisées 80 du composant fixe 32, et, d'autre part, de limiter les efforts transmis au composant fixe 32 qui seraient susceptibles de l'arracher de la plaque inférieure 12.

Cela permet par ailleurs d'augmenter les tolérances de fabrication d'un tel commutateur 26, au bénéfice du coût de réalisation.

Une telle conception de l'interrupteur 10 permet que les efforts nécessaires à la manipulation du commutateur 26 soient dirigés dans le plan général de la carte 10, ce qui évite qu'elle ne soit déformée, sans avoir à augmenter son épaisseur. Toutefois, un tel commutateur est aussi utilisable dans des cartes d'épaisseur plus importante, en conservant le bénéfice de la simplicité de réalisation et d'utilisation.

Bien entendu, une telle conception d'un commutateur 26 est aisément transposable pour la commande de tous types de circuits intégrés dans une carte de faible épaisseur.

De plus, un tel commutateur présente un encombrement faible, ce qui permet de prévoir plusieurs commutateurs sur la même carte pour réaliser différentes fonctions.

## Revendications

1. Carte à circuit intégré, du type comportant deux plaques extérieures, inférieure (12) et supérieure (14), séparées par au moins une plaque intercalaire (16), du type dans lequel les plaques portent des composants électroniques reliés entre eux par des pistes conductrices (36), et du type dans lequel il existe au moins un commutateur (26) susceptible d'autoriser ou d'interdire le passage d'un courant électrique entre deux de ses bornes (34) qui sont reliées à au moins une des pistes (36),
dans laquelle le commutateur (26) comporte un poussoir (28) qui est agencé au niveau d'un bord périphérique (40) de la carte (10), qui coulisse selon une direction longitudinale dans le plan de la carte entre deux positions active et de repos, et qui commande une touche de contact (30) destinée à relier électriquement les bornes (34) du commutateur (26).

2. Carte à circuit intégré selon la revendication 1, caractérisée en ce que le poussoir (28) du commutateur (26) est guidé selon une direction verticale perpendiculaire au plan général de la carte (10) par deux faces en vis-à-vis, supérieure (18) et inférieure (46), de deux plaques (12, 14) de la carte (10).

3. Carte à circuit intégré selon l'une des revendications 1 ou 2, caractérisée en ce que le poussoir (28) du commutateur (26) est reçu au moins partiellement dans une fente (38) qui est formée dans l'une au moins des plaques intercalaires (16), qui débouche dans un bord périphérique (40) de la carte (10), et dont deux bords longitudinaux (42) en vis-à-vis assurent le guidage du poussoir (28).

4. Carte à circuit intégré selon la revendication 3, caractérisée en ce que le poussoir (28) du commutateur (26) comporte au moins un ergot (52) qui s'étend selon une direction transversale dans le plan général de la carte (10), en ce que l'ergot (52) est reçu dans une lumière (54) agencée dans un des bords longitudinaux (42) de la fente (38) de la plaque intercalaire (16), et en ce que la course du poussoir (28) selon la direction longitudinale est déterminée, selon au moins un sens, par la coopération de l'ergot (52) avec un bord transversal d'extrémité longitudinale (58, 60) de la lumière (56).

5. Carte à circuit intégré selon la revendication 4, caractérisée en ce que le poussoir (28) est en forme de plaque, en ce qu'il comporte un bord arrière de commande (48), en ce qu'il comporte deux bords latéraux longitudinaux (54) qui assurent son guidage dans la fente (38), en ce que le poussoir (28) comporte deux ergots transversaux (52) qui s'étendent transversalement vers l'extérieur depuis chacun de ses bords latéraux (54) et qui sont reçus dans deux lumières (56) formées dans les bords longitudinaux (42) de la fente (38), et en ce qu'il comporte une découpe (62) en T dont une portion longitudinale (68) débouche, à l'arrière dans une portion transversale (64) de la découpe, et, à l'avant, dans un bord avant (70) du poussoir (28).

6. Carte à circuit intégré selon l'une quelconque des revendications précédentes, caractérisée en ce que le poussoir (28) est ramené élastiquement vers sa position de repos par un ressort de rappel (37).

7. Carte à circuit intégré selon la revendication 6 prise en combinaison avec la revendication 5, caractérisée en ce que le ressort de rappel (37) est agencé entre le bord avant (70) du poussoir (28) et un bord transversal (44) de fond de la fente (38).

8. Carte à circuit intégré selon la revendication 7, caractérisée en ce que le ressort de rappel (37) est réalisé sous la forme d'une lame élastique déformable dont une portion centrale (74) est en appui contre le bord de fond (44) de la fente (38) et dont les deux extrémités (76) sont recourbées pour être au contact du bord avant (70) du poussoir (28), de part et d'autre de l'extrémité avant débouchante de la portion longitudinale (68) de la découpe (62).

9. Carte à circuit intégré selon l'une quelconque des revendications 5 à 8, caractérisée en ce que le bord arrière (48) de commande du poussoir (28) affleure au niveau du bord (40) de la carte (10) lorsque le poussoir (28) est en position de repos, et en ce que les plaques extérieures (12, 14) de la carte (10) comportent, en regard de la fente (38), des entailles (50) formées dans leur bord (40) pour permettre à l'utilisateur de solliciter le poussoir (28) longitudinalement vers sa position active, en direction de l'intérieur de la carte (10), notamment en agissant sur le poussoir (28) par l'un de ses doigts.

10. Carte à circuit intégré selon l'une quelconque des revendications 5 à 9, caractérisée en ce que la touche de contact (30) est parallélépipédique, en ce qu'elle est reçue dans la portion transversale (64) de la découpe (62) du poussoir (28), et en ce qu'une face avant (72) de la touche de contact (30) est destinée à coopérer avec un composant fixe (32) du commutateur (26) qui, lorsque le poussoir (28) est en position active, est reçu à l'intérieur de la portion longitudinale (68) de la découpe (62) du poussoir (28).

11. Carte à circuit intégré selon la revendication 10, caractérisée en ce que le composant fixe (32) comporte deux extrémités (80) qui sont raccordées aux bornes (34) du commutateur (26) et qui sont destinées à être reliées électriquement par la touche de contact (30) lorsque le poussoir (28) est en position active.

12. Carte à circuit intégré selon la revendication 11, caractérisée en ce que le composant fixe (32) est un isolant dont les deux extrémités (80) sont métallisées et qui est destiné à être court-circuité par la touche de contact (30).

13. Carte à circuit intégré selon la revendication 11, caractérisée en ce que le composant fixe (32) est un condensateur, et en ce que la touche de contact (30) est destinée à provoquer la décharge du condensateur.

14. Carte à circuit intégré selon l'une quelconque des revendications précédentes, caractérisée en ce que la touche de contact (30) du commutateur (26) est une pastille conductrice en matériau polymère chargé en particules conductrices.

15. Carte à circuit intégré selon l'une quelconque des revendications précédentes, caractérisée en ce que le commutateur (26) commande le déclenchement d'un composant actif (20, 22) de la carte (10).

16. Carte à circuit intégré selon la revendication 15. caractérisée en ce que le commutateur (26) commande un circuit (20) de production de signaux acoustiques.

17. Carte à circuit intégré selon l'une quelconque des revendications précédentes, caractérisé en ce que l'épaisseur de la carte (10) est de l'ordre de 0.8 mm.

## Patentansprüche

1. Karte mit integriertem Schaltkreis der Art, die zwei äußere, eine untere (12) und eine obere (14), Platten umfaßt, die wenigstens durch eine Zwischenplatte (16) der Art voneinander getrennt sind, in der die Platten untereinander durch Leiterbahnen (36) verbundene elektronische Komponenten tragen, und der Art, in der wenigstens ein Umschalter (26) existiert, der geeignet ist, den Durchgang eines elektrischen Stroms zwischen zwei Anschlußklemmen (34) zu erlauben oder zu verwehren, die wenigstens mit einer der Bahnen (36) verbunden sind,
in der der Umschalter (26) einen Vordrücker (28) umfaßt, der auf der Höhe eines peripheren Randes (40) der Karte (10) angebracht ist, die gemäß einer Längsrichtung in der Ebene der Karte zwischen zwei Positionen, aktiv und Ruhestellung, gleitet und die eine Kontakttaste (30) steuert, die dazu bestimmt ist, die Anschlußklemmen (34) des Umschalters (26) elektrisch zu verbinden.

2. Karte mit integriertem Schaltkreis gemäß Anspruch 1, dadurch gekennzeichnet, daß der Vordrücker (28) des Umschalters (26) gemäß einer zur allgemeinen Ebene der Karte (10) senkrechten vertikalen Richtung durch zwei gegenüberliegende, eine obere (18) und eine untere (46), Seiten von zwei (12, 14) der Karte (10) geführt wird.

3. Karte mit integriertem Schaltkreis gemäß Anspruch 1 oder 2, dadurch gekennzeichnet, daß der Vordrücker (28) des Umschalters (26) wenigstens teilweise in einem Schlitz (38) aufgenommen wird, der in wenigstens einer der Zwischenplatten (16) gebildet wird, der in einen peripheren Rand (40) der Karte (10) mündet und dessen zwei gegenüberliegende längliche Ränder (42) die Führung des Vordrückers (28) gewährleisten.

4. Karte mit integriertem Schaltkreis gemäß Anspruch 3, dadurch gekennzeichnet, daß der Vordrücker (28) des Umschalters (26) wenigstens einen Vorsprung (52) umfaßt, der sich gemäß einer Querrichtung in der allgemeinen Ebene der Karte (10) erstreckt, daß der Vorsprung (52) in einer in einem der Ränder in Längsrichtung (42) des Schlitzes (38) der Zwischenplatte (16) angebrachten Öffnung (54) aufgenommen wird und daß der Weg des Vordrückers (28) gemäß der Längsrichtung gemäß wenigstens einer Richtung durch das Zusammenspiel des Vorsprungs (52) mit einem querliegenden Rand der Außenseite in Längsrichtung (58, 60) der Öffnung (56) festgelegt ist.

5. Karte mit integriertem Schaltkreis gemäß Anspruch 4, dadurch gekennzeichnet, daß der Vordrücker (28) als eine Platte ausgeformt ist, daß er einen hinteren Steuerrand (48) umfaßt, daß er zwei seitliche Ränder in Längsrichtung (54) umfaßt, die seine Führung in dem Schlitz (38) gewährleisten, daß der Vordrücker (28) zwei querliegende Vorsprünge (52) umfaßt, die sich in Querrichtung von jedem seiner seitlichen Ränder (54) nach außen erstrecken und die in zwei in den Längsseiten (42) des Schlitzes (38) gebildeten Öffnungen (56) aufgenommen werden, und daß er eine Ausschneidung (62) in T-Form umfaßt, deren einer länglicher Teil (68) hinten in ein querliegendes Teil (64) der Ausschneidung mündet und vorne in einen vorderen Rand (70) des Vordrückers (28).

6. Karte mit integriertem Schaltkreis gemäß einem der vorigen Ansprüche, dadurch gekennzeichnet, daß der Vordrücker (28) durch eine Rückholfeder (37) elastisch in seine Ruhestellung zurückgeholt wird.

7. Karte mit integriertem Schaltkreis gemäß Anspruch 6, in Verbindung mit Anspruch 5, dadurch gekennzeichnet, daß die Rückholfeder (37) zwischen dem vorderen Rand (70) des Vordrückers (28) und einem querliegenden hinteren Rand (44) des Schlitzes (38) angebracht wird.

8. Karte mit integriertem Schaltkreis gemäß Anspruch 7, dadurch gekennzeichnet, daß die Rückholfeder (37) in Form eines verformbaren elastischen Blattes ausgebildet ist, dessen zentraler Teil (74) gegen den Rand der Rückwand (44) des Schlitzes (38) anliegt und dessen zwei Endstücken (76) zurückgebogen sind, um von jeder Seite der aus dem Längsteil (68) der Ausschneidung (62) einmündenden vorderen Extremität mit dem vorderen Rand (70) des Vordrückers (28) Kontakt zu haben.

9. Karte mit integriertem Schaltkreis gemäß einem der Ansprüche 5 bis 8, dadurch gekennzeichnet, daß der hintere Rand (48) der Steuerung des Vordrückers (28) auf der Höhe des Randes (40) der Karte (10) ausgleicht, wenn der Vordrücker (28) in Ruhestellung ist, und daß die äußeren Platten (12, 14) der Karte (10) gegenüber dem Schlitz (38) in ihrem Rand (40) gebildete Kerben (50) umfassen, um es dem Benutzer zu erlauben, den Vordrücker (28) in Längsrichtung zu seiner aktiven Stellung, in die Innenrichtung der Karte (10) hinein, insbesondere dadurch zu betätigen, daß er durch einen seiner Finger auf den Vordrücker (28) einwirkt.

10. Karte mit integriertem Schaltkreis gemäß einem der Ansprüche 5 bis 8, dadurch gekennzeichnet, daß die Kontakttaste (30) parallelflach ist, daß sie in dem querliegenden Teil (64) der Ausschneidung (62) des Vordrückers (28) aufgenommen wird, daß eine Vorderseite (72) der Kontakttaste (30) dazu bestimmt ist, mit einem festen Bestandteil (32) des Umschalters (26), der, wenn der Vordrücker (28) in aktiver Stellung ist, im Innenteil des Längsteils (68) der Ausschneidung (62) des Vordrückers (28) aufgenommen wird, zusammenzuspielen.

11. Karte mit integriertem Schaltkreis gemäß Anspruch 10, dadurch gekennzeichnet, daß der feste Bestandteil (32) zwei Extremitäten (80) umfaßt, die an die Anchlußklemmen (34) des Umschalters (26) angeschlossen sind, und die dazu bestimmt sind, elektrisch durch die Kontakttaste (30) verbunden zu werden, wenn der Vordrücker (28) in aktiver Stellung ist.

12. Karte mit integriertem Schaltkreis gemäß Anspruch 11, dadurch gekennzeichnet, daß der feste Bestandteil (32) ein Isolator ist, dessen Extremitäten (80) metallisiert sind, und der dazu bestimmt ist, durch die Kontakttaste (30) kurz geschlossen zu werden.

13. Karte mit integriertem Schaltkreis gemäß Anspruch 11, dadurch gekennzeichnet, daß der feste Bestandteil (32) ein Kondensator ist und daß die Kontakttaste (30) dazu bestimmt ist, die Entladung des Kondensators hervorzurufen.

14. Karte mit integriertem Schaltkreis, gemäß einem der vorigen Ansprüche, dadurch gekennzeichnet, daß die Kontakttaste (30) des Umschalters (26) eine leitende Anschlußfläche aus einem mit leitenden Partikeln aufgeladenen Polymermaterial ist.

15. Karte mit integriertem Schaltkreis gemäß einem der vorigen Ansprüche, dadurch gekennzeichnet, daß der Umschalter (26) das Auslösen eines aktiven Bestandteils (20,22) der Karte (10) steuert.

16. Karte mit integriertem Schaltkreis gemäß Anspruch 15, dadurch gekennzeichnet, daß der Umschalter (26) einen Kreislauf (20) zur Produktion von akustischen Signalen steuert.

17. Karte mit integriertem Schaltkreis gemäß einem der vorigen Ansprüche, dadurch gekennzeichnet, daß die Stärke der Karte (10) in der Größenordnung von 0,8 mm liegt.

## Claims

1. An integrated circuit board of the type having two outer cards, lower (12) and upper (14), separated by at least one intermediate card (16), of the type in which the cards carry electronic components connected together by conductive tracks (36), and of the type in which there exists at least one switch (26) able to enable or inhibit the passage of an electric current between two of its terminals (34) which are connected to at least one of the tracks (36),
in which the switch (26) has a pusher (28) arranged at a peripheral edge (40) of the board (10), which slides in a longitudinal direction in the plane of the board between two active and idle positions, and which controls a contact button (30) intended to electrically connect the terminals (34) of the switch (26).

2. An integrated circuit board according to Claim 1, characterised in that the pusher (28) of the switch (26) is guided in a vertical direction perpendicular to the overall plane of the board (10) by two opposite faces, upper (18) and lower (46), of two cards (12, 14) of the board (10).

3. An integrated circuit board according to one of Claims 1 or 2, characterised in that the pusher (28) of the switch (26) is received at least partially in a slot (38) formed in at least one of the intermediate cards (16), which opens out in a peripheral edge (40) of the board (10), and two facing longitudinal edges (42) of which guide the pusher (28).

4. An integrated circuit board according to Claim 3, characterised in that the pusher (28) of the switch (26) has at least one stud (52) which extends in a transverse direction in the overall plane of the board (10), in that the stud (52) is received in an aperture (54) arranged in one of the longitudinal edges (42) of the slot (38) in the intermediate card (16), and in that the travel of the pusher (28) in the longitudinal direction is determined, in at least one direction, by the cooperation of the stud (52) with a transverse longitudinal end edge (58, 60) of the aperture (56).

5. An integrated circuit board according to Claim 4, characterised in that the pusher (28) is in the form of a plate, in that it has a rear control edge (48), in that it has two longitudinal lateral edges (54) which guide it in the slot (38), in that the pusher (28) has two transverse studs (52) which extend transversally outwards from each of its lateral edges (54) and which are received in two apertures (56) formed in the longitudinal edges (42) of the slot (38), and in that it has a T-shaped cutout (62), a longitudinal portion (68) of which opens out to the rear in a transverse portion (64) of the cutout and to the front in a front edge (70) of the pusher (28).

6. An integrated circuit board according to any one of the preceding claims, characterised in that the pusher (28) is returned elastically towards its idle position by a return spring (37).

7. An integrated circuit board according to Claim 6 taken in combination with Claim 5, characterised in that the return spring (37) is arranged between the front edge (70) of the pusher (28) and a bottom transverse edge (44) of the slot (38).

8. An integrated circuit board according to Claim 7, characterised in that the return spring (37) is produced in the form of a deformable elastic blade, a central portion (74) of which is in abutment against the bottom edge (44) of the slot (38) and the two ends (76) of which are curved so as to be in contact with the front edge (70) of the pusher (28), on each side of the opening-out front end of the longitudinal portion (68) of the cutout (62).

9. An integrated circuit board according to any one of Claims 5 to 8, characterised in that the rear control edge (48) of the pusher (28) is flush with the edge (40) of the board (10) when the pusher (28) is in the idle position, and in that the outer cards (12, 14) of the board (10) have, opposite the slot (38), notches (50) formed in their edges (40) to enable the user to push the pusher (28) longitudinally towards its active position, in the direction of the inside of the board (10), notably by acting on the pusher (28) through one of its fingers.

10. An integrated circuit board according to any one of Claims 5 to 9, characterised in that the contact button (30) is parallelepipedal, in that it is received in the transverse portion (64) of the cutout (62) in the pusher (28), and in that a front face (72) of the contact button (30) is intended to cooperate with a fixed component (32) of the switch (26) which, when the pusher (28) is in the active position, is received inside the longitudinal portion (68) of the cutout (62) in the pusher (28).

11. An integrated circuit board according to Claim 10, characterised in that the fixed component (32) has two ends (80) which are connected to the terminals (34) of the switch (26) and which are intended to be electrically connected by the contact button (30) when the pusher (28) is in the active position.

12. An integrated circuit board according to Claim 11, characterised in that the fixed component (32) is an insulant, the two ends (80) of which are metallised and which is intended to be short-circuited by the contact button (30).

13. An integrated circuit board according to Claim 11, characterised in that the fixed component (32) is a capacitor, and in that the contact key (30) is intended to cause the discharge of the capacitor.

14. An integrated circuit board according to any one of the preceding claims, characterised in that the contact button (30) of the switch (26) is a conductive slug made of polymeric material loaded with conductive particles.

15. An integrated circuit board according to any one of the preceding claims, characterised in that the switch (26) controls the triggering of an active component (20, 22) of the board (10).

16. An integrated circuit board according to Claim 15, characterised in that the switch (26) controls a circuit (20) producing acoustic signals.

17. An integrated circuit board according to any one of the preceding claims, characterised in that the thickness of the board (10) is around 0.8 mm.
